# EUROPÄISCHE PATENTSCHRIFT

(11) **EP 3 120 049 B1**
(45) Veröffentlichungstag und Bekanntmachung des Hinweises auf die Patenterteilung: **12.06.2019**
(21) Anmeldenummer: 15706427.0
(22) Anmeldetag: 19.02.2015
(51) Int. Cl.: F16H 59/02, F16H 61/22

(54) **WÄHLHEBELRÜCKSTELLVORRICHTUNG FÜR EIN FAHRZEUGGETRIEBE SOWIE VERFAHREN UND VORRICHTUNG ZUM BETREIBEN EINER SOLCHEN WÄHLHEBELRÜCKSTELLVORRICHTUNG**
SELECTOR LEVER RESET DEVICE FOR A VEHICLE GEARBOX, AND METHOD AND DEVICE FOR OPERATING SUCH A SELECTOR LEVER RESET DEVICE
DISPOSITIF DE RAPPEL DE LEVIER DE SÉLECTION POUR BOÎTE DE VITESSES DE VÉHICULE AUTOMOBILE ET PROCÉDÉ ET DISPOSITIF POUR FAIRE FONCTIONNER UN TEL DISPOSITIF DE RAPPEL DE LEVIER DE SÉLECTION

(30) Priorität: 20.03.2014 DE 102014205248
(43) Veröffentlichungstag der Anmeldung: 25.01.2017
(73) Patentinhaber: ZF Friedrichshafen AG, 88046 Friedrichshafen (DE)
(72) Erfinder: HESSEL, Alex, 49448 Lemförde (DE)
(86) Internationale Anmeldenummer: PCT/EP2015/053462
(87) Internationale Veröffentlichungsnummer: WO 2015/139908

(56) Entgegenhaltungen:
- DE-A1-102005 023 926
- DE-A1-102007 015 262
- DE-A1-102007 015 375
- DE-A1-102007 058 850
- DE-A1-102008 041 374
- DE-B3-102007 058 922
- DE-C1- 19 944 179
- JP-A- 2008 302 816

## Beschreibung

Die vorliegende Erfindung bezieht sich auf eine Wählhebelrückstellvorrichtung für ein Fahrzeuggetriebe, auf ein Verfahren zum Betreiben einer solchen Wählhebelrückstellvorrichtung, auf eine entsprechende Vorrichtung sowie auf ein entsprechendes Computerprogrammprodukt.

Die zunehmende Elektronisierung von Fahrzeugsystemen hat auch im Bereich der Getriebeschaltungen einen Technologiewechsel eingeleitet. Unter dem Schlagwort Shift-by-wire wird die Substitution der mechanischen Getriebebetätigung durch Elektronik zusammengefasst. Dabei kann die mechanische Verbindung zwischen Schaltung und Getriebe durch eine elektrische oder elektronische Schnittstelle ersetzt werden. Die Umsetzung des Schaltvorgangs im Getriebe erfolgt beispielsweise hydraulisch oder elektrisch. Die DE 10 2007 058 850 A offenbart beispielsweise eine Betätigungseinrichtung zur Auswahl von Schaltstufen eines Gangwechselgetriebes. Die Betätigungseinrichtung umfasst einen zwischen zumindest drei Fahrstufenstellungen bewegbaren Wählhebel sowie eine Sperrvorrichtung zur Einschränkung des Bewegungsbereichs des Wählhebels.

Dazu kann ein Bedienelement mit einer Sensorik zur Erkennung von Fahrerwünschen ausgestattet sein, die über eine entsprechende Schnittstelle an das Getriebe weitergegeben werden können.

Vor diesem Hintergrund schafft die vorliegende Erfindung eine Wählhebelrückstellvorrichtung für ein Fahrzeuggetriebe, ein Verfahren und eine Vorrichtung zum Betreiben einer solchen Wählhebelrückstellvorrichtung sowie schließlich ein entsprechendes Computerprogrammprodukt gemäß den Hauptansprüchen. Vorteilhafte Ausgestaltungen ergeben sich aus den Unteransprüchen und der nachfolgenden Beschreibung.

Der vorliegende Ansatz schafft eine Wählhebelrückstellvorrichtung für ein Fahrzeuggetriebe, wobei die Wählhebelrückstellvorrichtung folgende Merkmale aufweist:
einen Wählhebel zum Wählen einer Getriebestellung des Fahrzeuggetriebes; und
eine Hebelführungseinrichtung, die zumindest ein Schiebeelement und einen Sperrschlitten aufweist, wobei das Schiebeelement in der Hebelführungseinrichtung entlang einer Schiebeachse verschiebbar angeordnet ist und eine Rastkontur aufweist, wobei der Wählhebel mit dem Schiebeelement mechanisch gekoppelt oder koppelbar ist, um entlang der Schiebeachse zwischen einer Ruhestellung und einer Betätigungsstellung bewegt zu werden, wobei der Sperrschlitten in der Hebelführungseinrichtung entlang einer von der Schiebeachse abweichenden Schlittenachse zumindest zwischen einer Raststellung und einer Freigabestellung verschiebbar angeordnet ist und zumindest ein Rastelement aufweist, wobei das Rastelement mit der Rastkontur verrastet ist, wenn sich der Wählhebel in der Betätigungsstellung und der Sperrschlitten in der Raststellung befindet, und das Rastelement die Rastkontur freigibt, wenn sich der Sperrschlitten in der Freigabestellung befindet.

Unter einem Wählhebel kann ein in einem Fahrzeug angeordneter Hebel zum Betätigen des Fahrzeuggetriebes verstanden werden. Das Fahrzeuggetriebe kann beispielsweise als elektronisch ansteuerbares Getriebe, auch Shift-by-wire-Getriebe genannt, ausgeführt sein. Hierbei kann durch die Betätigung des Wählhebels ein Steuersignal zum Wählen einer Getriebestellung des Fahrzeuggetriebes bereitgestellt werden. Unter einer Getriebestellung kann beispielsweise eine Übersetzungsstufe oder ein Betriebsmodus des Fahrzeuggetriebes verstanden werden. Unter einer Hebelführungseinrichtung kann eine Einrichtung verstanden werden, die ausgebildet ist, um eine kontrollierte Bewegung des Wählhebels zwischen definierten Hebelstellungen zu ermöglichen. Unter einem Schiebeelement kann beispielsweise eine verschiebbare Platte oder ein verschiebbarer Rahmen verstanden werden. Unter einer Rastkontur kann etwa eine auf dem Schiebeelement ausgebildete Erhebung, eine Aussparung in dem Schiebelement oder ein hakenförmiges Element verstanden werden. Unter einem Sperrschlitten kann ein verschiebbares Trägerelement mit einem Rastelement verstanden werden. Unter einem Rastelement kann ein Bauelement verstanden werden, das ausgebildet ist, um derart in die Rastkontur einzugreifen, dass eine Bewegung des Wählhebels entlang der Schiebeachse blockiert wird. Beispielsweise kann es sich bei dem Rastelement um ein nasen- oder hakenförmiges Element handeln, das ausgebildet ist, um über eine Erhebung der Rastkontur zu gleiten und sich dabei mit der Rastkontur zu verkeilen oder um sich in einer Aussparung der Rastkontur zu verhaken.

Der vorliegende Ansatz beruht auf der Erkenntnis, dass ein Wählhebel für ein Fahrzeuggetriebe mittels eines Rastmechanismus in einer vordefinierten Hebelstellung fixiert werden kann und beim Lösen des Rastmechanismus in eine Ausgangsstellung zurückbewegt werden kann. Vorteilhafterweise kann der Rastmechanismus mit sehr geringem Kraftaufwand gelöst werden, indem beispielsweise zwei ineinandergreifende Rastelemente gegeneinander verschoben werden. Somit ist es möglich, eine zum Zurückstellen des Wählhebels in die Ausgangsstellung erforderliche Aktuatorkraft im Vergleich zu herkömmlichen Lösungen deutlich zu reduzieren. Die Aktuatorkraft lässt sich auf ein Minimum reduzieren, wenn gemäß einer nachfolgend beschriebenen Ausführungsform eine Vorspannkraft auf den Wählhebel wirkt, sodass der Wählhebel beim Lösen des Rastmechanismus durch die Vorspannkraft in die Ausgangsstellung zurückbewegt wird. Dadurch lassen sich die Herstellungskosten einer Wählhebelrückstellvorrichtung reduzieren. Ferner kann dadurch eine Akustik der Wählhebelrückstellvorrichtung verbessert werden.

Bei einer mechanischen Schaltbetätigung, beispielsweise einer Seilzugschaltung, stimmt die Wählhebelstellung aufgrund der mechanischen Kopplung immer mit der Getriebestellung überein, d. h., dadurch, dass die Getriebepositionen stabil sind, sind auch die Wählhebelpositionen stabil.

Eine elektrische Schaltung, auch Shift-by-wire oder E-Schaltung genannt, weist keine mechanische Kopplung zwischen Wählhebel und Getriebe auf. Dadurch können Probleme bei Schaltbetätigungen mit stabilen Wählhebelpositionen entstehen. Beispielsweise kann es unter bestimmten Bedingungen und im Fehlerfall dazu kommen, dass die Wählhebelstellung nicht mehr mit der Getriebeposition übereinstimmt, sodass der Fahrer unter Umständen eine falsche Information erhält. Um dies zu verhindern, kann der Wählhebel der Getriebeposition nachgeführt werden.

Mittels einer Wählhebelrückstellvorrichtung gemäß dem hier vorgestellten Ansatz kann der Wählhebel einer tatsächlichen Getriebestellung besonders effizient nachgeführt werden, sodass sichergestellt ist, dass die Stellung des Wählhebels mit der tatsächlichen Getriebestellung übereinstimmt. Beispielsweise kann die Wählhebelrückstellvorrichtung ausgebildet sein, um den Wählhebel nach dessen Betätigung in eine unkritische Position zu bewegen, ohne dass dazu starke Motoren oder große Übersetzungen erforderlich wären. Somit kann eine elektronische Getriebenschaltung realisiert werden, die trotz fehlender mechanischer Kopplung zwischen Getriebe und Wählhebel ähnlich stabile Wählhebelstellungen wie eine mechanische Getriebeschaltung aufweist.

Gemäß einer Ausführungsform kann die Wählhebelrückstellvorrichtung mit zumindest einem Federelement vorgesehen sein, das ausgebildet ist, um das Rastelement gegen die Rastkontur zu drücken. Dadurch ist ein zuverlässiges Verrasten der Rastkontur mit dem Rastelement sichergestellt.

Gemäß einer weiteren Ausführungsform kann die Wählhebelrückstellvorrichtung mit einer Antriebseinheit vorgesehen sein, die ausgebildet ist, um den Sperrschlitten zumindest zwischen der Raststellung und der Freigabestellung zu bewegen. Unter einer Antriebseinheit kann beispielsweise ein Elektro-, Pneumatik- oder Hydraulikmotor oder ein Elektromagnet verstanden werden. Mittels der Antriebseinheit kann der Sperrschlitten schnell und kontrolliert bewegt werden. Dadurch, dass beim Verschieben des Sperrschlittens lediglich Reibungswiderstände überwunden werden, kann die Antriebseinheit sehr kompakt und kostengünstig ausgeführt werden.

Vorteilhafterweise kann die Antriebseinheit mit einem Übersetzungsgetriebe gekoppelt sein. Insbesondere kann das Übersetzungsgetriebe ausgebildet sein, um eine durch die Antriebseinheit erzeugte Drehbewegung in eine lineare Bewegung des Sperrschlittens zu übersetzen. Mittels des Übersetzungsgetriebes kann eine effiziente Kraftübertragung von der Antriebseinheit auf den Sperrschlitten realisiert werden. Somit ermöglicht das Übersetzungsgetriebe die Verwendung kostengünstiger Motoren, insbesondere von Drehmotoren, als Antriebseinheit.

Die Wählhebelrückstellvorrichtung kann eine Schaltkulisse aufweisen, die zumindest eine der Ruhestellung zugeordnete erste Vertiefung und eine der Betätigungsstellung zugeordnete zweite Vertiefung aufweist, wobei die erste Vertiefung und die zweite Vertiefung durch eine geneigte Wechselfläche miteinander verbunden sind. Hierbei kann ein Endbereich des Wählhebels in der Schaltkulisse zumindest zwischen der ersten Vertiefung und der zweiten Vertiefung verschiebbar angeordnet sein. Unter einer Schaltkulisse kann eine schalenartige Vorrichtung zum Führen des Endbereichs des Wählhebels verstanden werden. Beispielsweise kann die Schaltkulisse eine Bodenplatte aufweisen, in der die beiden Vertiefungen ausgebildet sind. Die Vertiefungen können etwa als Schaltgassen realisiert sein. Unter einer geneigten Wechselfläche kann eine Schräge zwischen den Vertiefungen verstanden werden. Beispielsweise kann die Wechselfläche als Querrille zwischen der ersten und der zweiten Vertiefung ausgestaltet sein. Mittels der Schaltkulisse kann der Wählhebel komfortabel, d. h. mit geringem Widerstand, entlang eines vorgegebenen Hebelwegs bewegt werden. Ferner ist somit sichergestellt, dass eine Hebelstellung mit der Getriebestellung übereinstimmt.

Gemäß einer weiteren Ausführungsform kann die Wählhebelrückstellvorrichtung mit einer Vorspanneinrichtung realisiert sein, die ausgebildet ist, um den Wählhebel mit einer Vorspannkraft vorzuspannen, wobei der Wählhebel ausgebildet ist, um in der Freigabestellung durch die Vorspannkraft von der Betätigungsstellung zurück in die Ruhestellung bewegt zu werden. Unter einer Vorspanneinrichtung kann eine Einrichtung verstanden werden, die ausgebildet ist, um den Wählhebel mittels eines geeigneten Vorspannmittels, etwa eines Federelements, mit einer Vorspannkraft zu beaufschlagen. Eine solche Vorspanneinrichtung hat den Vorteil, dass der Wählhebel allein durch die Wirkung der Vorspannkraft, d. h. ohne die Verwendung eines zusätzlichen Aktuators, in die Ruhestellung zurückgestellt werden kann.

Um eine effiziente Wählhebelrückstellvorrichtung mit möglichst kompakter Bauform zu realisieren, kann der Wählhebel eine Hebelausnehmung aufweisen. Dabei kann die Vorspanneinrichtung einen verschiebbar in der Hebelausnehmung angeordneten oder anordenbaren Rastkörper und zumindest ein Vorspannelement zum Vorspannen des Rastkörpers aufweisen. Ein Endbereich des Rastkörpers kann in der Schaltkulisse zumindest zwischen der ersten Vertiefung und der zweiten Vertiefung verschiebbar angeordnet sein. Insbesondere kann hierbei der Rastkörper in der Betätigungsstellung mit einer größeren Vorspannkraft vorgespannt sein als in der Ruhestellung. Unter einem Rastkörper kann ein länglicher, beispielsweise zylinderförmiger Körper verstanden werden. Unter einem Vorspannelement kann etwa eine Feder verstanden werden. Beispielsweise kann die Feder in der Hebelausnehmung zwischen den Rastkörper und den Wählhebel gespannt sein, um den Rastkörper vorzuspannen. Der Endbereich des Rastkörpers kann eine einer Form der ersten und der zweiten Vertiefung entsprechende Rundung aufweisen. Dadurch, dass der Rastkörper in der Betätigungsstellung mit einer größeren Vorspannkraft vorgespannt sein kann als in der Ruhestellung, ist sichergestellt, dass der Wählhebel zuverlässig und unter sehr geringem Kraftaufwand in die Ruhestellung zurückkehrt.

Gemäß einer weiteren Ausführungsform kann die erste Vertiefung als Automatikgasse zum automatischen Schalten des Fahrzeuggetriebes und die zweite Vertiefung als manuelle Gasse zum manuellen Schalten des Fahrzeuggetriebes ausgestaltet sein. Insbesondere kann hierbei die Ruhestellung einer Parkstellung des Fahrzeuggetriebes entsprechen. Unter einer Parkstellung, auch Auto-P-Stellung genannt, kann eine Stellung des Fahrzeuggetriebes verstanden werden, in der das Fahrzeuggetriebe blockiert ist. Durch diese Ausführungsform ist gewährleistet, dass der Wählhebel beim Aktivieren der Parkstellung automatisch von der manuellen Gasse in die Parkstellung zurückkehrt.

Der Sperrschlitten, auch Sperrelement genannt, kann ferner zumindest ein Blockierelement aufweisen und ausgebildet sein, um entlang der Schlittenachse in eine Blockierstellung bewegt zu werden. Dabei kann das Blockierelement in der Blockierstellung ein Bewegen des Wählhebels von der Ruhestellung in die Betätigungsstellung verhindern. Unter einem Blockierelement kann ein Element des Sperrschlittens verstanden werden, das in der Blockierstellung einen Weg des Wählhebels versperrt. Beispielsweise kann der Sperrschlitten mit einem Vorsprung oder einem Stift als Blockierelement ausgeführt sein. Mittels des Blockierelements kann verhindert werden, dass der Wählhebel, etwa durch einen Fahrer des Fahrzeugs, versehentlich in die Ruhestellung zurückgestellt wird.

Mit besonders geringem Herstellungs- und Kostenaufwand lässt sich der Wählhebel mit dem Schiebeelement koppeln, wenn der Wählhebel durch eine Aussparung des Schiebelements hindurchgeführt ist.

Die Hebelführungseinrichtung kann ferner ein weiteres Schiebelement aufweisen, wobei das weitere Schiebelement entlang einer von der Schiebeachse abweichenden weiteren Schiebeachse verschiebbar in der Hebelführungseinrichtung angeordnet ist und ausgebildet ist, um ein Bewegen des Wählhebels zwischen einer Mehrzahl vordefinierter Hebelstellungen entlang der weiteren Schiebeachse zu ermöglichen. Insbesondere kann dabei das Schiebeelement und/oder der Sperrschlitten verschiebbar an dem weiteren Schiebeelement angeordnet sein. Die weitere Schiebeachse und die Schlittenachse können insbesondere parallel zueinander verlaufen. Diese Ausführungsform ermöglicht eine kontrollierte Betätigung des Wählhebels in mehrere Richtungen. Gleichzeitig kann die Hebelführungseinrichtung mit einer möglichst kompakten Bauform ausgeführt werden. Somit lässt sich der Wählhebel zum Ansteuern mehrerer unterschiedlicher Funktionen verwenden.

Der hier vorgestellte Ansatz schafft zudem ein Verfahren zum Betreiben einer Wählhebelrückstellvorrichtung gemäß einer der vorangehend beschriebenen Ausführungsformen, wobei das Verfahren folgende Schritte umfasst:
Verrasten der Rastkontur mit dem Rastelement aufgrund einer Bewegung des Wählhebels von der Ruhestellung in die Betätigungsstellung entlang einer Schiebeachse; und
Freigeben der Rastkontur aufgrund einer Bewegung des Sperrschlittens von der Raststellung in die Freigabestellung entlang einer von der Schiebeachse abweichenden Schlittenachse.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird anhand der beigefügten Zeichnungen beispielhaft näher erläutert. Es zeigen:
Fig. 1 eine schematische Querschnittsdarstellung einer Wählhebelrückstellvorrichtung gemäß einem Ausführungsbeispiel der vorliegenden Erfindung;
Fig. 2a, 2b, 2c, 2d schematische dreidimensionale Darstellungen einer Wählhebelrückstellvorrichtung mit blockierter manueller Gasse gemäß einem Ausführungsbeispiel der vorliegenden Erfindung;
Fig. 3a, 3b, 3c, 3d, 3e schematische dreidimensionale Darstellungen einer Wählhebelrückstellvorrichtung mit freigegebener manueller Gasse gemäß einem Ausführungsbeispiel der vorliegenden Erfindung;
Fig. 4 eine schematische dreidimensionale Querschnittsdarstellung einer Wählhebelrückstellvorrichtung mit freigegebener manueller Gasse gemäß einem Ausführungsbeispiel der vorliegenden Erfindung;
Fig. 5a, 5b schematische dreidimensionale Querschnittsdarstellungen einer Wählhebelrückstellvorrichtung mit eingerastetem Wählhebel gemäß einem Ausführungsbeispiel der vorliegenden Erfindung;
Fig. 6a, 6b schematische dreidimensionale Querschnittsdarstellungen einer Wählhebelrückstellvorrichtung mit freigegebener Rastkontur gemäß einem Ausführungsbeispiel der vorliegenden Erfindung;
Fig. 7a, 7b schematische dreidimensionale Querschnittsdarstellungen einer Wählhebelrückstellvorrichtung mit freigegebener Rastkontur gemäß einem Ausführungsbeispiel der vorliegenden Erfindung;
Fig. 8 eine schematische dreidimensionale Darstellung einer Wählhebelrückstellvorrichtung mit einem Gehäuse gemäß einem Ausführungsbeispiel der vorliegenden Erfindung;
Fig. 9a, 9b, 9c, 9d, 9e, 9f schematische dreidimensionale Darstellungen verschiedener Montagezustände einer Wählhebelrückstellvorrichtung mit einem Gehäuse gemäß einem Ausführungsbeispiel der vorliegenden Erfindung;
Fig. 10 ein Ablaufdiagramm eines Verfahrens zum Betreiben einer Wählhebelrückstellvorrichtung gemäß einem Ausführungsbeispiel der vorliegenden Erfindung; und
Fig. 11 ein Blockschaltbild einer Vorrichtung zum Durchführen eines Verfahrens gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

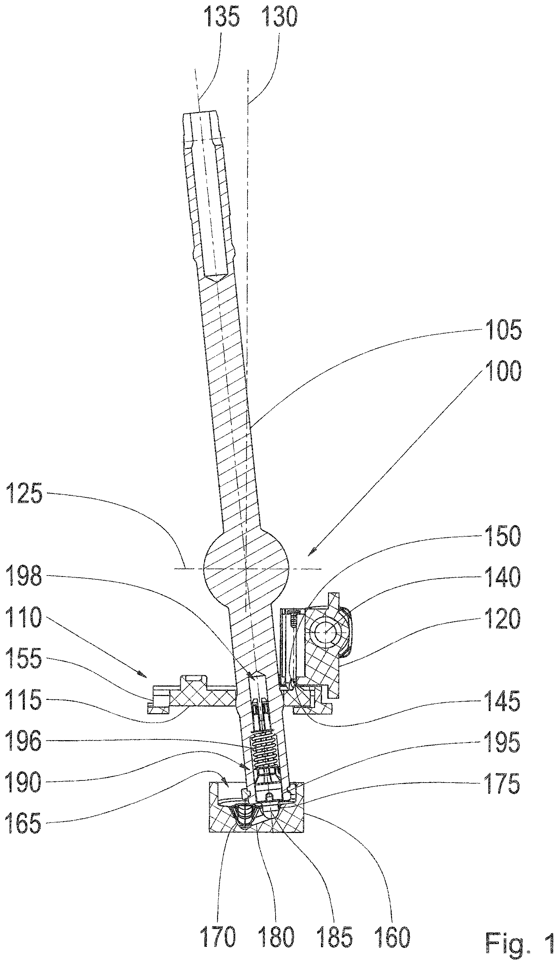

Fig. 1 zeigt eine schematische Querschnittsdarstellung einer Wählhebelrückstellvorrichtung 100 gemäß einem Ausführungsbeispiel der vorliegenden Erfindung. Die Wählhebelrückstellvorrichtung 100 umfasst einen Wählhebel 105 zum Wählen einer Getriebestellung eines hier nicht gezeigten Fahrzeuggetriebes und eine Hebelführungseinrichtung 110. Die Hebelführungseinrichtung 110 umfasst ein Schiebeelement 115 und einen Sperrschlitten 120. Das Schiebeelement 115 ist entlang einer Schiebeachse 125 in der Hebelwirkungseinrichtung 110 verschiebbar angeordnet. Das Schiebeelement 115 ist plattenartig ausgeformt und weist eine Aussparung auf, durch die der Wählhebel 105 hindurchgeführt ist, um den Wählhebel 105 mit dem Schiebeelement 115 mechanisch zu koppeln. Der Wählhebel 105 ist ausgebildet, um mithilfe des Schiebeelements 115 zwischen einer Ruhestellung 130 und einer Betätigungsstellung 135 entlang der Schiebeachse 125 bewegt zu werden. Beispielhaft ist der Wählhebel 105 in der Ruhestellung 130 rechtwinklig zum Schiebeelement 115 und in der Betätigungsstellung 135 in einem spitzen Winkel zum Schiebeelement 115 angeordnet. In Fig. 1 ist der Wählhebel 105 in der Betätigungsstellung 135 gezeigt.

Der Sperrschlitten 120 ist gemäß diesem Ausführungsbeispiel in einem Randbereich der Hebelführungseinrichtung 110 entlang einer von der Schiebeachse 125 abweichenden Schlittenachse 140 verschiebbar zwischen einer Raststellung und einer Freigabestellung an dem Schiebeelement 115 angeordnet. In Fig. 1 verlaufen die Schlittenachse 140 und die Schiebeachse 125 beispielhaft senkrecht zueinander, wobei die Schlittenachse 140 senkrecht zu einer Betrachtungsebene verläuft und somit als Punkt dargestellt ist. Das Schiebeelement 115 ist ausgebildet, um beim Bewegen des Wählhebels 105 in die Betätigungsstellung 135 derart in Richtung des Sperrschlittens 120 verschoben zu werden, dass ein Randbereich des Schiebeelements 115 durch den Sperrschlitten 120 abgedeckt ist.

Das Schiebeelement 115 umfasst eine Rastkontur 145, auch Rastierung oder Rastierkontur genannt, die gemäß diesem Ausführungsbeispiel als eine im Randbereich des Schiebeelements 115 befindliche Erhebung ausgeformt ist. Der Sperrschlitten 120 umfasst ein Rastelement 150, das in der in Fig. 1 gezeigten Raststellung des Sperrschlittens 120 mit der Rastkontur 145 verrastet ist. Das Rastelement 150 kann auch als Rastierelement bezeichnet werden.

Gemäß diesem Ausführungsbeispiel ist das Rastelement 150 als Rastnase ausgeführt, die ausgebildet ist, um beim Verschieben des Schiebeelements 115 in Richtung des Sperrschlittens 120, d. h. beim Bewegen des Wählhebels 105 in die Betätigungsstellung 135, über die Erhebung der Rastkontur 145 gedrückt zu werden, sodass der Wählhebel 105 in der Betätigungsstellung 135 fixiert ist.

In Fig. 1 ist die Wählhebelrückstellvorrichtung 100 mit einem optionalen weiteren Schiebeelement 155 dargestellt, wobei das weitere Schiebeelement 155 entlang einer weiteren Schiebeachse verschiebbar in der Hebelführungseinrichtung 110 angeordnet ist. Gemäß diesem Ausführungsbeispiel entspricht die weitere Schiebeachse der Schlittenachse 140, sodass das Schiebeelement 115 und das weitere Schiebeelement 155 senkrecht zueinander verschiebbar sind. Ferner kann das Schiebeelement 115, wie in Fig. 1 gezeigt, in dem weiteren Schiebeelement 155 verschiebbar angeordnet sein. Das weitere Schiebeelement 155 erfüllt somit die Funktion eines Rahmens zum Führen des Schiebeelements 115 entlang der Schiebeachse 125. Demgemäß kann das weitere Schiebeelement 155 auch als Längsschieber und das Schiebeelement 115 auch als Querschieber bezeichnet werden. Das weitere Schiebelement 155 kann wiederum in einer hier nicht gezeigten Schiene oder Halteeinrichtung, die etwa Teil eines Gehäuses der Wählhebelvorrichtung 100 sein kann, verschiebbar angeordnet sein. Somit ist der Wählhebel 105 ausgebildet, um mittels der Schiebelemente 115, 155 entlang zweier Schiebeachsen 125, 140 bewegt zu werden. Beispielsweise ist der Wählhebel 105 entlang der weiteren Schiebeachse 140 zwischen einer Mehrzahl vordefinierter Hebelstellungen bewegbar.

Der Sperrschlitten 120 kann angrenzend an eine parallel zur weiteren Schiebeachse 140 bzw. zur Schlittenachse 140 verlaufende Kante des weiteren Schiebeelements 155 angeordnet sein. Die Kante kann als Führungsschiene zum Führen des Sperrschlittens 120 zwischen der Raststellung und der Freigabestellung dienen.

Die Wählhebelrückstellvorrichtung 100 umfasst zusätzlich eine Schaltkulisse 160. Die Schaltkulisse 160 ist beispielsweise als ein schalenförmiges Element mit einer Kulissenaussparung 165 ausgestaltet. Eine Bodenfläche der Kulissenaussparung 165 weist eine erste Vertiefung 170 und eine zweite Vertiefung 175 auf. Die erste Vertiefung 170 ist beispielsweise als Automatikgasse zum automatischen Schalten des Fahrzeuggetriebes und die zweite Vertiefung 175 als manuelle Gasse zum manuellen Schalten des Fahrzeuggetriebes ausgebildet. Die Vertiefungen 170, 175 bilden somit eine Rastierung für den Wählhebel 105. Die manuelle Gasse kann auch als Tippgasse bezeichnet werden. Die Vertiefungen 170, 175 sind über eine Wechselgasse 180 miteinander verbunden, wobei die Wechselgasse 180 als Wechselfläche zum Wechseln einer Hebelstellung zwischen der ersten Vertiefung 170 und der zweiten Vertiefung 175 fungiert.

Beispielhaft ist die erste Vertiefung 170 mit einer größeren Tiefe als die zweite Vertiefung 175 ausgeführt. Die Wechselgasse 180 weist somit eine Neigung auf.

Ein Hebelende 185 des Wählhebels 105 ist in der Schaltkulisse 160 verschiebbar zwischen der ersten Vertiefung 170 und der zweiten Vertiefung 175 angeordnet. Das Hebelende 185 ist in der Betätigungsstellung 135 in der zweiten Vertiefung 175 angeordnet und ausgebildet, um beim Bewegen des Wählhebels 105 in die Ruhestellung 130 über die Wechselgasse 180 in die erste Vertiefung 170 bewegt zu werden. Beispielsweise entspricht die Ruhestellung 130 einer Parkstellung des Fahrzeuggetriebes.

Gemäß diesem Ausführungsbeispiel ist die Wählhebelrückstellvorrichtung 100 mit einer optionalen Vorspanneinrichtung 190 realisiert. Die Vorspanneinrichtung 190 umfasst einen länglichen Rastkörper 195 und ein Vorspannelement 196 zum Vorspannen des Rastkörpers 195. Das Vorspannelement 196 ist beispielhaft als Schraubenfeder realisiert. Der Wählhebel 105 ist im Bereich des Hebelendes 185 mit einer Hebelausnehmung 198 ausgebildet, wobei der Rastkörper 195 verschiebbar in der Hebelausnehmung 198 angeordnet ist. Beispielhaft ist der Rastkörper 195 in Fig. 1 entlang einer Längsachse des Wählhebels 105 verschiebbar.

Gemäß diesem Ausführungsbeispiel ist der Rastkörper 195, der auch als Rastierelement bezeichnet werden kann, durch das Vorspannelement 196 hindurchgeführt, wobei das Vorspannelement 196 derart in der Hebelausnehmung 105 eingespannt ist, dass ein Endbereich des Rastkörpers 195 durch eine Vorspannkraft des Vorspannelements 196 in die Schaltkulisse 160 gedrückt wird. Der Endbereich des Rastkörpers 195 ragt in diesem vorgespannten Zustand des Wählhebels 105 aus der Hebelausnehmung 198 heraus. Der Endbereich des Rastkörpers 195 bildet somit das zwischen den Vertiefungen 170, 175 verschiebbare Hebelende 185. Der Rastkörper 195 ist ausgebildet, um den Wählhebel 105 in der hier nicht gezeigten Freigabestellung des Sperrschlittens 120 durch die Vorspannkraft von der Betätigungsstellung 135 über eine Schräge der Wechselgasse 180 zurück in die Ruhestellung 130 zu drücken. Dadurch, dass die zweite Vertiefung 175 eine geringere Tiefe als die erste Vertiefung 170 aufweist, ist die Vorspannkraft des Vorspannelements 196 in der Betätigungsstellung 135, in der das Hebelende 185 in der zweiten Vertiefung 175 angeordnet ist, größer als in der Ruhestellung 130, in der das Hebelende 185 in der ersten Vertiefung 170 angeordnet ist.

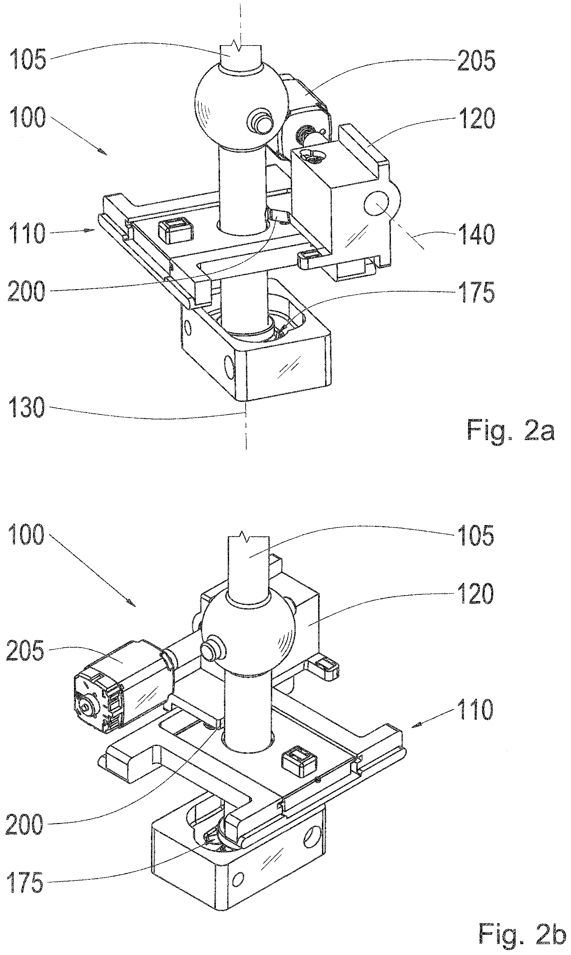

Die Figuren 2a bis 2d zeigen schematische dreidimensionale Darstellungen einer Wählhebelrückstellvorrichtung 100 mit blockierter manueller Gasse 175 gemäß einem Ausführungsbeispiel der vorliegenden Erfindung. Im Unterschied zu Fig. 1 ist das Hebelende des Wählhebels 105 in der ersten Vertiefung angeordnet, die als Automatikgasse realisiert ist. Der Wählhebel 105 ist ausgebildet, um zwischen verschiedenen Hebelstellungen in der Automatikgasse hin- und herbewegt zu werden. Wie bereits anhand von Fig. 1 beschrieben, ist die zweite Vertiefung 175 dementsprechend als manuelle Gasse realisiert.

Des Weiteren weist der Sperrschlitten 120 ein Blockierelement 200 auf. Das Blockierelement 200 ist beispielhaft durch einen flächigen Vorsprung einer Bodenplatte des Sperrschlittens 120 realisiert, wobei der Vorsprung über eine Grundfläche des Sperrschlittens 120 hinausragt. Das Blockierelement 200 erstreckt sich benachbart zu einer Oberfläche des Schiebeelements 115 sowie parallel zu einer Haupterstreckungsebene des Schiebeelements 115. Alternativ kann das Blockierelement 200 auch als Stift oder als ein sonstiges Element mit einer geeigneten geometrischen Form ausgebildet sein.

Im Gegensatz zu Fig. 1 ist der Sperrschlitten 120 in den Figuren 2a bis 2d in einer Blockierstellung angeordnet, in der der Wählhebel 105 derart durch das Blockierelement 200 blockiert ist, dass der Wählhebel 105 in der Automatikgasse eingesperrt ist, d. h. lediglich entlang der Automatikgasse verschiebbar ist.

Die in den Figuren 2a bis 2d gezeigte Wählhebelrückstellvorrichtung 100 ist zudem mit einer Antriebseinheit 205 ausgestattet, die beispielhaft als Elektromotor ausgeführt ist und mit dem Sperrschlitten 120 mechanisch gekoppelt ist, um den Sperrschlitten 120 entlang der Schlittenachse 140 zwischen der Raststellung, der Freigabestellung und der hier gezeigten Blockierstellung zu bewegen. Um eine möglichst kompakte Bauform der Wählhebelrückstellvorrichtung 100 zu realisieren, kann die Antriebseinheit 205 an dem Sperrschlitten 120 angeordnet sein.

Fig. 2a zeigt den Wählhebel 105 in der Ruhestellung 130, auch X-Stellung genannt. Die Ruhestellung 130 ist beispielsweise mittig zwischen einem ersten Ende und einem zweiten Ende der Automatikgasse angeordnet.

Fig. 2b zeigt eine Rückansicht der in Fig. 2a gezeigten Wählhebelrückstellvorrichtung 100.

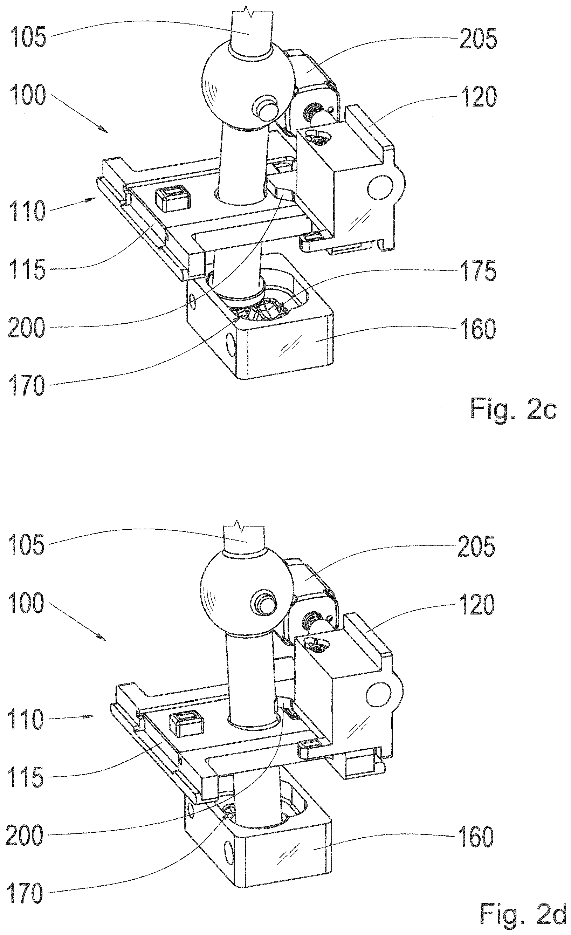

Fig. 2c zeigt den Wählhebel 105 in einer ersten Automatikstellung, auch A-Stellung genannt. In der A-Stellung ist das Hebelende in dem ersten Ende der Automatikgasse 170 angeordnet.

Fig. 2d zeigt den Wählhebel 105 in einer zweiten Automatikstellung, auch B-Stellung genannt. In der B-Stellung ist das Hebelende in dem zweiten Ende der Automatikgasse 170 angeordnet.

Im Unterschied zur Ruhestellung 130 ist der Wählhebel 105 in der A- und der B-Stellung jeweils schräg zum Schiebeelement 115 bzw. zur Schaltkulisse 160 angeordnet.

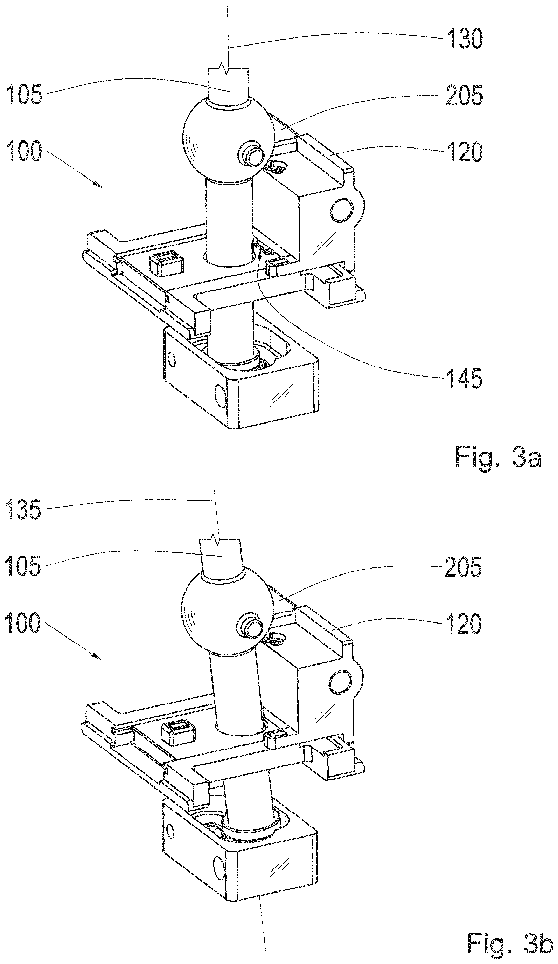

Die Figuren 3a bis 3e zeigen schematische dreidimensionale Darstellungen einer Wählhebelrückstellvorrichtung 100 mit freigegebener manueller Gasse 175 gemäß einem Ausführungsbeispiel der vorliegenden Erfindung. Im Unterschied zu den Figuren 2a bis 2d ist der Sperrschlitten 120 in den Figuren 3a bis 3e in der Raststellung dargestellt. In der Raststellung ist das Blockierelement in eine Position verschoben, in der der Hebelweg zwischen der Ruhestellung und der Betätigungsstellung freigegeben ist.

In Fig. 3a ist der Wählhebel 105 wie in Fig. 2a in der Ruhestellung 130 gezeigt. Hierbei ist die Rastkontur 145 angrenzend an eine dem Wählhebel 105 zugewandte Kante des Sperrschlittens 120 angeordnet.

Fig. 3b zeigt den Wählhebel 105 in der Betätigungsstellung 135, auch M-Stellung genannt. Die Rastkontur ist durch den Sperrschlitten 120 abgedeckt und mit dem ebenfalls nicht sichtbaren Rastelement verrastet. Der Wählhebel 105 ist hierbei entlang der manuellen Gasse bewegbar angeordnet.

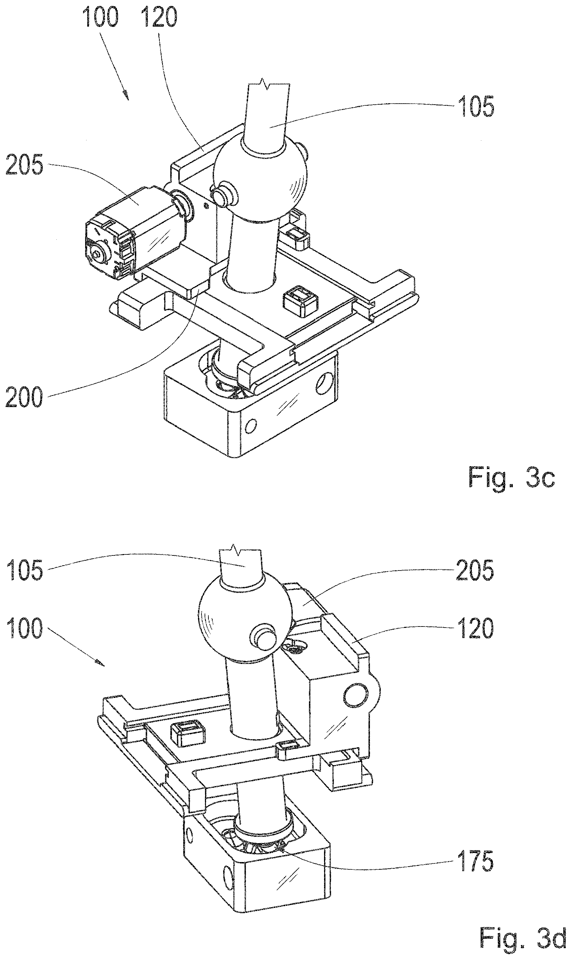

Fig. 3c zeigt eine Rücksicht der in Fig. 3b gezeigten Wählhebelrückstellvorrichtung 100 mit dem deaktivierten Blockierelement 200.

Fig. 3d zeigt den Wählhebel 105 in einer ersten manuellen Schaltstellung, auch Plus-Stellung genannt, in der der Wählhebel 105 in einem ersten Ende der manuellen Gasse 175 angeordnet ist. Beispielsweise ist das Fahrzeuggetriebe ausgebildet, um beim Bewegen des Wählhebels 105 in die Plus-Stellung in einen höheren Gang geschaltet zu werden.

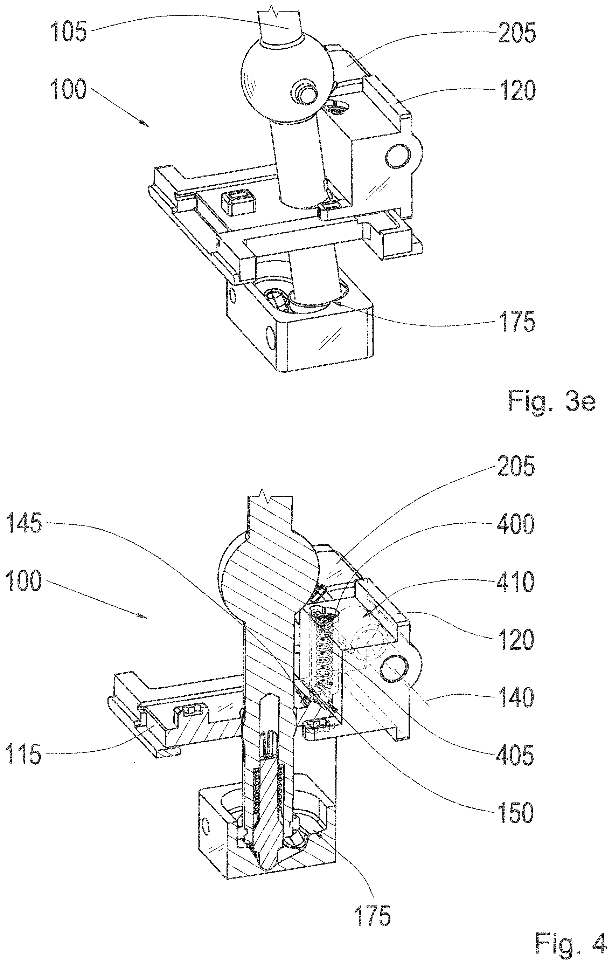

Fig. 3e zeigt den Wählhebel 105 einer zweiten manuellen Schaltstellung, auch Minus-Stellung genannt, in der der Wählhebel 105 in einem zweiten Ende der manuellen Gasse 175 angeordnet ist. Beispielsweise ist das Fahrzeuggetriebe ausgebildet, um beim Bewegen des Wählhebels 105 in die Minus-Stellung in einen niedrigeren Gang geschaltet zu werden.

Fig. 4 zeigt eine schematische dreidimensionale Querschnittsdarstellung einer Wählhebelrückstellvorrichtung 100 mit freigegebener manueller Gasse 175 gemäß einem Ausführungsbeispiel der vorliegenden Erfindung. In Fig. 4 ist ein Schnitt durch die in Fig. 3a gezeigte Wählhebelrückstellvorrichtung 100 dargestellt. Darin ist zu erkennen, dass der Sperrschlitten 120 mit einem Führungskanal 400 zum Führen des Rastelements 150 ausgeführt ist. Beispielhaft verläuft der Führungskanal 400 senkrecht zum Schiebeelement 115. In dem Führungskanal 400 ist ein Federelement 405 angeordnet. Das Federelement 405 ist zwischen einem dem Rastelement 150 gegenüberliegenden Kanalende des Führungskanals 400 und dem Rastelement 150 derart eingespannt, dass das Rastelement 150 gegen den Randbereich des Schiebeelements 115, in dem die Rastkontur 145 als Erhebung ausgebildet ist, gedrückt wird. Somit wird eine schiebefeste Verrastung des Rastelements 150 mit der Rastkontur 145 in der hier nicht gezeigten Raststellung des Sperrschlittens 120 ermöglicht.

Ferner ist die Wählhebelrückstellvorrichtung 100 in Fig. 4 mit einem Übersetzungsgetriebe 410 realisiert, das sich beispielhaft entlang der Schlittenachse 140 in dem Sperrschlitten 120 erstreckt. Hierbei ist eine Welle der Antriebseinheit 205 verdrehfest mit dem Übersetzungsgetriebe 410 verbunden. Das Übersetzungsgetriebe 410 ist beispielsweise als Spindel ausgeformt und dient dazu, eine Drehbewegung der Welle der Antriebseinheit 205 in eine lineare Bewegung des Sperrschlittens 120 entlang der Schlittenachse 140 zu übersetzen.

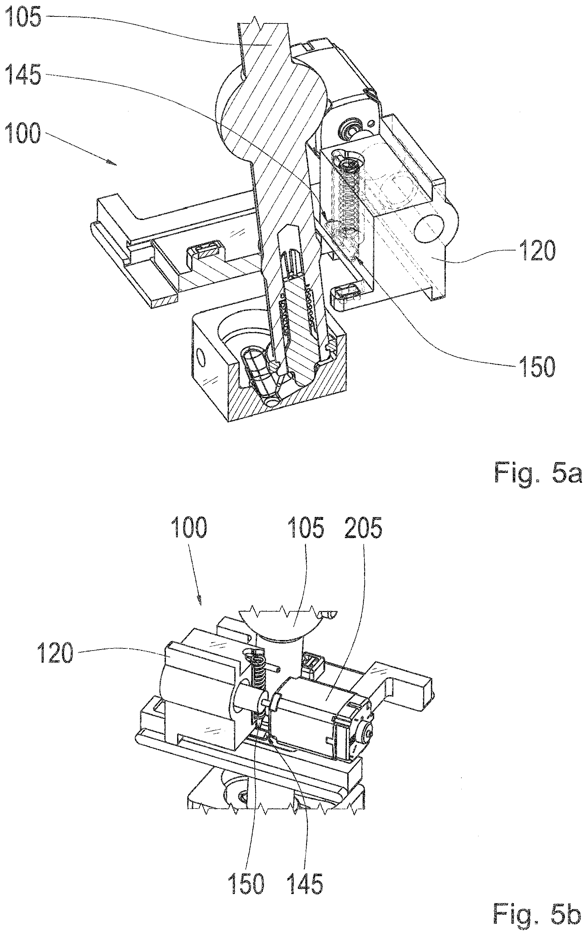

Die Figuren 5a und 5b zeigen schematische dreidimensionale Querschnittsdarstellungen einer Wählhebelrückstellvorrichtung 100 mit eingerastetem Wählhebel 105 gemäß einem Ausführungsbeispiel der vorliegenden Erfindung. Bei der in Fig. 5 gezeigten Darstellung handelt es sich um einen Schnitt durch die in Fig. 3b gezeigte Wählhebelrückstellvorrichtung 100. Darin ist zu erkennen, dass das Rastelement 150 in der Raststellung des Sperrschlittens 120 über die Erhebung der Rastkontur 145 hinübergedrückt ist, sodass sich das Rastelement 150 im Gegensatz zu Fig. 4 nun auf einer dem Wählhebel 105 zugewandten Seite der Erhebung befindet.

Fig. 5b zeigt eine Rückansicht der in Fig. 5a gezeigten Wählhebelrückstellvorrichtung 100, wobei im Vordergrund der Sperrschlitten 120 sowie die Antriebseinheit 105 dargestellt sind und im Hintergrund der Wählhebel 105 dargestellt ist.

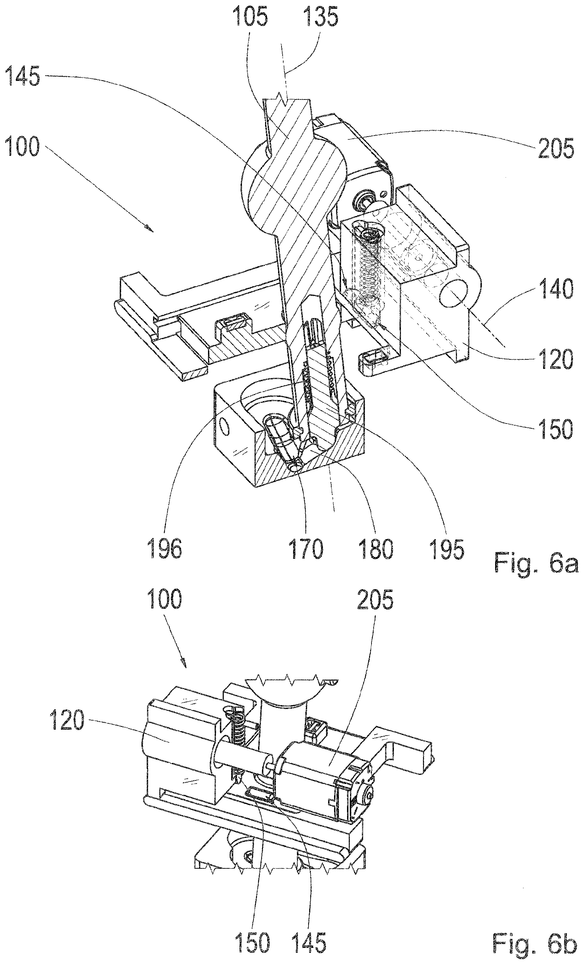

Die Figuren 6a und 6b zeigen schematische dreidimensionale Querschnittsdarstellungen einer Wählhebelrückstellvorrichtung 100 mit freigegebener Rastkontur 145 gemäß einem Ausführungsbeispiel der vorliegenden Erfindung. Im Unterschied zu den Figuren 5a und 5b befindet sich der Sperrschlitten 120 in den Figuren 6a und 6b in der Freigabestellung, in der das Rastelement 150 entlang der Schlittenachse 140 seitlich versetzt zur Rastkontur 145 angeordnet ist. Somit ist die Rastkontur 145 freigegeben und die Fixierung des Wählhebels 105 in der Betätigungsstellung 135 aufgehoben.

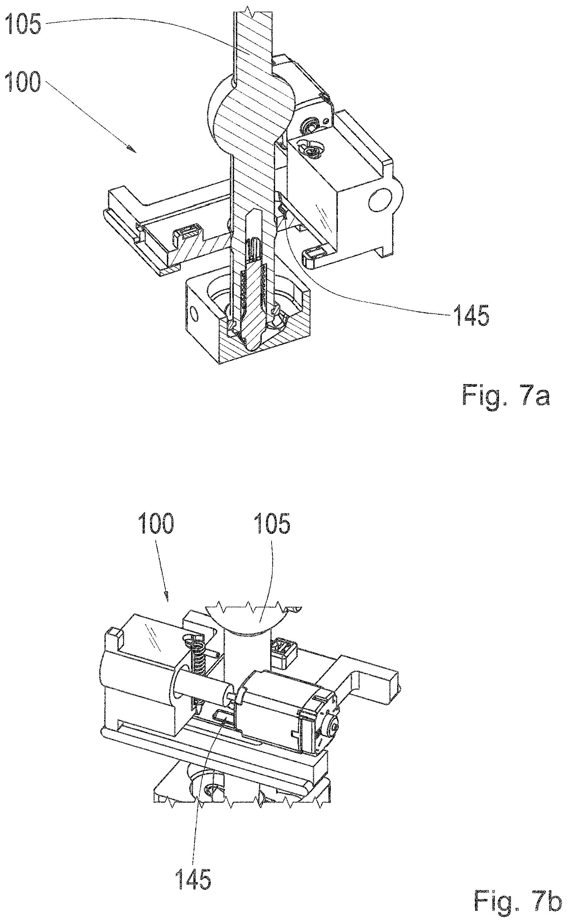

Durch die auf den Rastkörper 195 wirkende Vorspannkraft des Vorspannelements 196 wird nun der Wählhebel 105 über die Wechselgasse 180 zurück in die erste Vertiefung 170 bewegt, wie in den nachfolgend beschriebenen Figuren 7a und 7b gezeigt.

Der Sperrschlitten 120 mit dem integrierten Rastelement 150 kann gemäß einem Ausführungsbeispiel ausgebildet sein, um ansprechend auf ein Signal, das einen Positionswechsel des Fahrzeuggetriebes repräsentiert, etwa verursacht durch die Aktivierung einer Auto-P-Funktion, mittels der Antriebseinheit 205 von der Raststellung in die Freigabestellung gefahren zu werden.

In Fig. 6b ist eine Rückansicht der in Fig. 6a gezeigten Wählhebelrückstellvorrichtung 100 gezeigt. Eine Perspektive der in Fig. 6b gezeigten Rückansicht entspricht einer Perspektive der in Fig. 5b gezeigten Rückansicht.

Die Figuren 7a und 7b zeigen schematische dreidimensionale Querschnittsdarstellungen einer Wählhebelrückstellvorrichtung 100 mit freigegebener Rastkontur 145 gemäß einem Ausführungsbeispiel der vorliegenden Erfindung. Im Gegensatz zu den Figuren 6a und 6b befindet sich der Wählhebel 105 in den Figuren 7a und 7b in der Ruhestellung 130.

In Fig. 7b ist eine Rückansicht der in Fig. 7a gezeigten Wählhebelrückstellvorrichtung 100 gezeigt. Eine Perspektive der in Fig. 7b gezeigten Rückansicht entspricht der Perspektive der in den Figuren 5b und 6b gezeigten Rückansichten.

Gemäß einem Ausführungsbeispiel wird durch eine Überlagerung unterschiedlicher Rastierkonturen 145, 150, 170, 175, 185 und die Aktivierung jeweils benötigter Rastierkonturen eine Rückstellung des Wählhebels 105 ohne zusätzliche Aktuatorkraft ermöglicht. Der Aktuator 205 dient lediglich dazu, ein vorgespanntes System freigeben. Dadurch ist eine wesentlich geringere Kraft erforderlich, was sich positiv auf Kosten und Akustik auswirkt. Eine optionale Nutzung des Aktuators 205 für eine zusätzliche Sperrfunktion bringt einen zusätzlichen Bauraum- und Kostenvorteil.

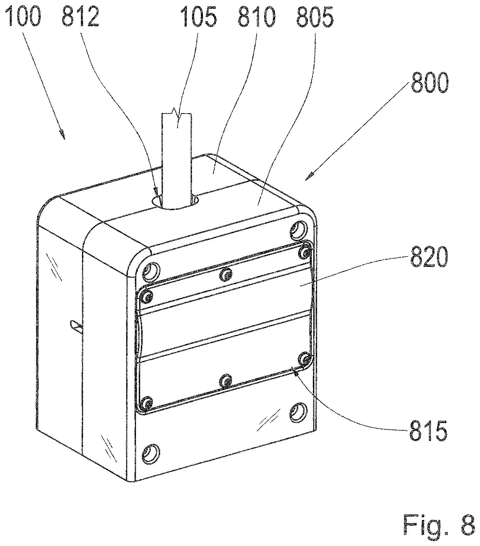

Fig. 8 zeigt eine schematische dreidimensionale Darstellung einer Wählhebelrückstellvorrichtung 100 mit einem Gehäuse 800 gemäß einem Ausführungsbeispiel der vorliegenden Erfindung. Die Wählhebelrückstellvorrichtung 100 ist von dem Gehäuse 800 umschlossen. Das Gehäuse 800 weist beispielhaft einen zweiteiligen Aufbau aus einer ersten Gehäusehälfte 805 und einer zweiten Gehäusehälfte 810 auf. Die Gehäusehälften 805, 810 sind beispielsweise miteinander verschraubt. Der Wählhebel 105 ist durch eine Gehäuseaussparung 812 des Gehäuses 800 hindurchgeführt. Eine Stirnseite der ersten Gehäusehälfte 805 ist mit einer Stirnseitenöffnung 815 ausgeführt, die durch eine Verschlussplatte 820 verschlossen ist.

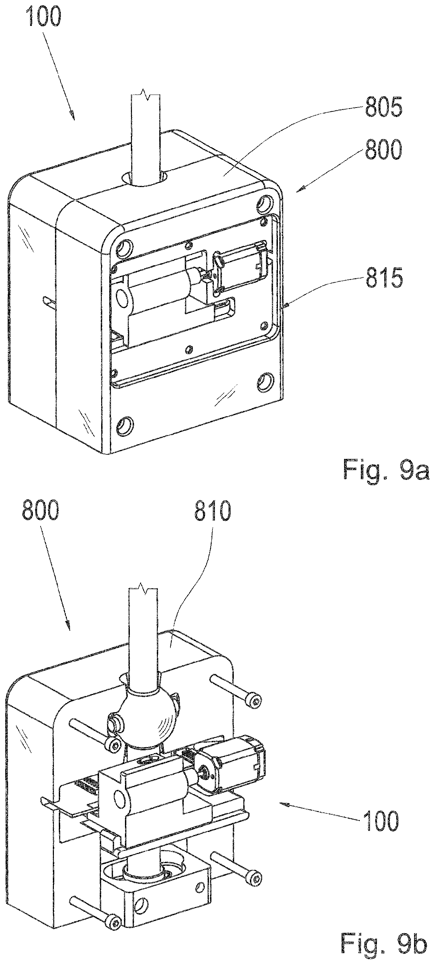

Die Figuren 9a bis 9f zeigen schematische dreidimensionale Darstellungen verschiedener Montagezustände einer Wählhebelrückstellvorrichtung 100 mit einem Gehäuse 800 gemäß einem Ausführungsbeispiel der vorliegenden Erfindung. Bei der Wählhebelrückstellvorrichtung 100 kann es sich um die in den Figuren 1 bis 7b gezeigte Wählhebelrückstellvorrichtung handeln.

Fig. 9a zeigt das Gehäuse 800 ohne Verschlussplatte. Durch die Stirnseitenöffnung 820 ist ein erster Teil der Wählhebelrückstellvorrichtung 100 zu erkennen. Der erste Teil der Wählhebelrückstellvorrichtung 100 ist in einer entsprechend geformten Aussparung der ersten Gehäusehälfte 805 angeordnet.

Fig. 9b zeigt das Gehäuse 800 ohne die erste Gehäusehälfte. Analog zur ersten Gehäusehälfte ist auch die zweite Gehäusehälfte 810 mit einer Aussparung realisiert, die ausgeformt ist, um einen zweiten Teil der Wählhebelrückstellvorrichtung 100 aufzunehmen.

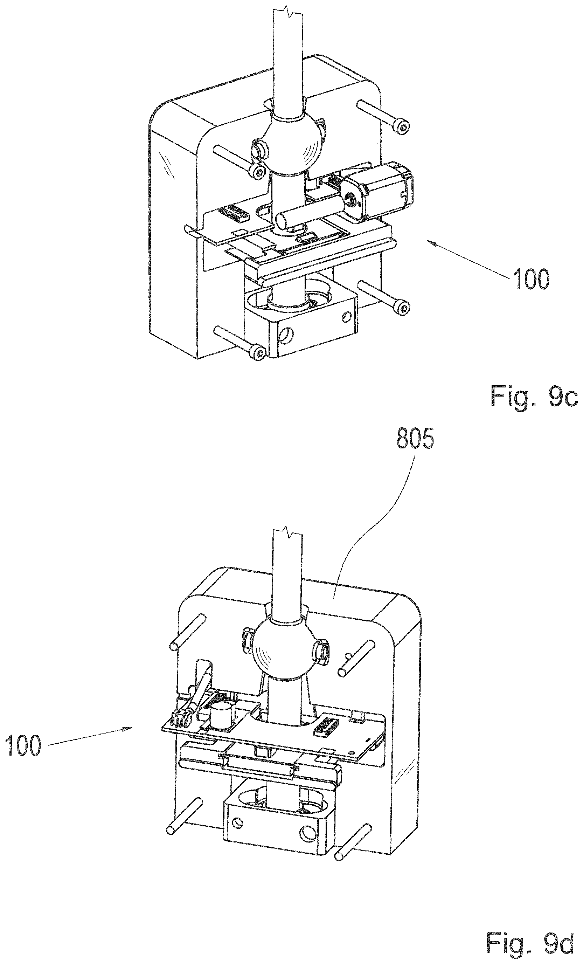

Fig. 9c zeigt die Wählhebelrückstellvorrichtung 100 gemäß Fig. 9b, jedoch ohne Sperrschlitten.

Fig. 9d zeigt die erste Gehäusehälfte 805 mit dem darin befindlichen ersten Teil der Wählhebelrückstellvorrichtung 100.

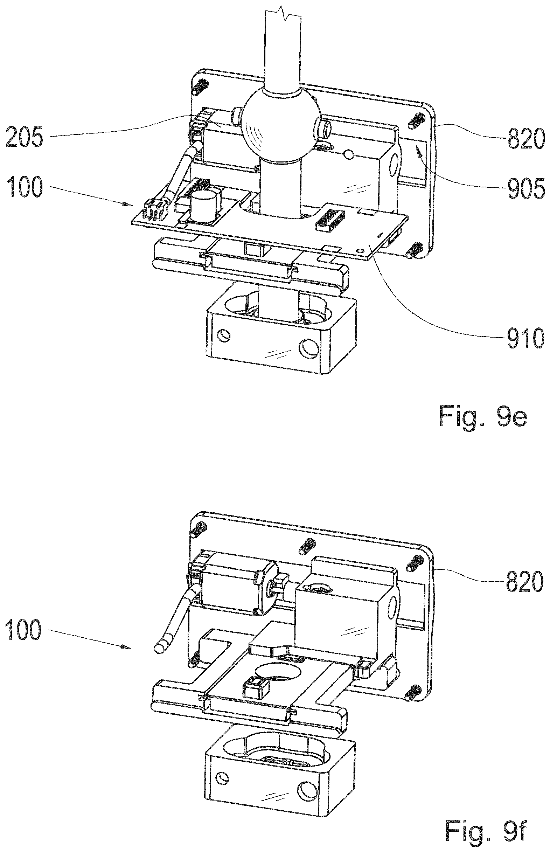

Fig. 9e zeigt die Wählhebelrückstellvorrichtung 100 und die Verschlussplatte 820. Die Verschlussplatte 820 ist mit einer Plattenvertiefung 905 ausgeführt, in der ein der Verschlussplatte 820 zugewandter Teilbereich der Antriebseinheit 205 sowie ein der Verschlussplatte 820 zugewandter Teilbereich des Sperrschlittens 120 angeordnet sind. Die Plattenvertiefung 905 kann ausgebildet sein, um den Sperrschlitten 120 entlang der Schlittenachse zu führen.

Ferner umfasst die Wählhebelrückstellvorrichtung 100 eine Leiterplatte 910 mit einer Steuerelektronik. Die Steuerelektronik ist mit der Antriebseinheit 205 verbunden und ausgebildet, um die Antriebseinheit 205 beispielsweise unter Verwendung eines eine Getriebestellung repräsentierenden Signals zu steuern.

Fig. 9f zeigt die Wählhebelrückstellvorrichtung 100 und die Verschlussplatte 820 gemäß Fig. 9e, jedoch ohne den Wählhebel und die Leiterplatte mit der Steuerelektronik.

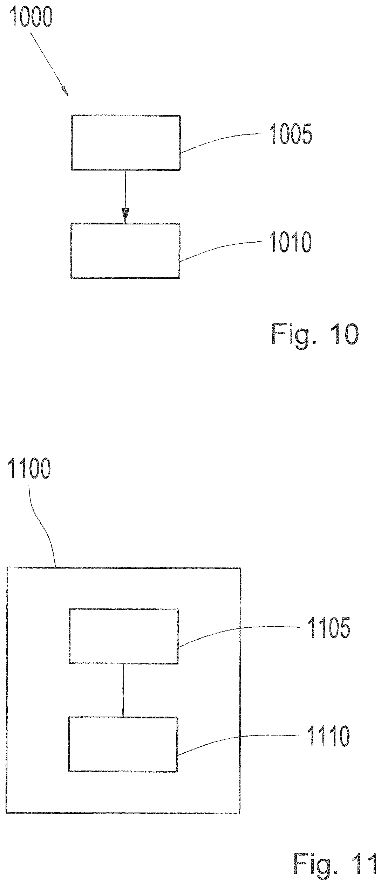

Fig. 10 zeigt ein Ablaufdiagramm eines Verfahrens 1000 zum Betreiben einer Wählhebelrückstellvorrichtung gemäß einem Ausführungsbeispiel der vorliegenden Erfindung. In einem Schritt 1005 wird die Rastkontur mit dem Rastelement aufgrund einer Bewegung des Wählhebels von der Ruhestellung in die Betätigungsstellung entlang einer Schiebeachse verrastet. Aufgrund einer Bewegung des Sperrschlittens von der Raststellung in die Freigabestellung entlang einer von der Schiebeachse abweichenden Schlittenachse wird nun in einem Schritt 1010 die Rastkontur freigegeben.

Gemäß einem Ausführungsbeispiel kann eine Wählhebelbewegung mittels zweier Rastierkonturen und eines Aktuators, etwa mittels eines Elektromotors, aber auch mittels anderer Aktuatoren wie Linearantriebe, Elektromagnete, Piezoelemente oder Muscle-Wire, erzeugt werden. Beispielhaft handelt es sich bei der erzeugten Wählhebelbewegung um eine Rückstellung des Wählhebels von einer Tippgasse in eine Automatikgasse einer Shift-by-wire-Schaltung.

Fig. 11 zeigt ein Blockschaltbild einer Vorrichtung 1100 zum Durchführen eines Verfahrens gemäß einem Ausführungsbeispiel der vorliegenden Erfindung. Die Vorrichtung 1100 umfasst eine Verrastungseinheit 1105 zum Verrasten der Rastkontur mit dem Rastelement aufgrund einer Bewegung des Wählhebels von der Ruhestellung in die Betätigungsstellung entlang einer Schiebeachse sowie eine Freigabeeinheit 1110 zum Freigeben der Rastkontur aufgrund einer Bewegung des Sperrschlittens von der Raststellung in die Freigabestellung entlang einer von der Schiebeachse abweichenden Schlittenachse.

### Bezugszeichen

- 100: Wählhebelrückstellvorrichtung
- 105: Wählhebel
- 110: Hebelführungseinrichtung
- 115: Schiebelement
- 120: Sperrschlitten
- 125: Schiebeachse
- 130: Ruhestellung
- 135: Betätigungsstellung
- 140: Schlittenachse
- 145: Rastkontur
- 150: Rastelement
- 155: weiteres Schiebeelement
- 160: Schaltkulisse
- 165: Kulissenaussparung
- 170: erste Vertiefung
- 175: zweite Vertiefung
- 180: Wechselgasse
- 185: Hebelende
- 190: Vorspanneinrichtung
- 195: Rastkörper
- 196: Vorspannelement
- 198: Hebelausnehmung
- 200: Blockierelement
- 205: Antriebseinheit
- 400: Führungskanal
- 405: Federelement
- 410: Übersetzungsgetriebe
- 800: Gehäuse
- 805: erste Gehäusehälfte
- 810: zweite Gehäusehälfte
- 812: Gehäuseaussparung
- 815: Stirnseitenöffnung
- 820: Verschlussplatte
- 905: Plattenvertiefung
- 910: Leiterplatte mit Steuerelektronik
- 1000: Verfahren zum Betreiben einer Wählhebelrückstellvorrichtung
- 1005: Verrasten der Rastkontur mit dem Rastelement
- 1010: Freigeben der Rastkontur
- 1100: Vorrichtung zum Durchführen eines Verfahrens zum Betreiben einer Wählhebelrückstellvorrichtung
- 1105: Verrastungseinheit
- 1110: Freigabeeinheit

## Patentansprüche

1. Wählhebelrückstellvorrichtung (100) für ein Fahrzeuggetriebe, wobei die Wählhebelrückstellvorrichtung (100) folgende Merkmale aufweist:
einen Wählhebel (105) zum Wählen einer Getriebestellung des Fahrzeuggetriebes; und
eine Hebelführungseinrichtung (110), die zumindest ein Schiebeelement (115) und einen Sperrschlitten (120) aufweist, **dadurch gekennzeichnet, dass** das Schiebeelement (115) in der Hebelführungseinrichtung (110) entlang einer Schiebeachse (125) verschiebbar angeordnet ist und eine Rastkontur (145) aufweist, wobei der Wählhebel (105) mit dem Schiebeelement (115) mechanisch gekoppelt oder koppelbar ist, um entlang der Schiebeachse (125) zwischen einer Ruhestellung (130) und einer Betätigungsstellung (135) bewegt zu werden, wobei der Sperrschlitten (120) in der Hebelführungseinrichtung (110) entlang einer von der Schiebeachse (125) abweichenden Schlittenachse (140) zumindest zwischen einer Raststellung und einer Freigabestellung verschiebbar angeordnet ist und zumindest ein Rastelement (150) aufweist, wobei das Rastelement (150) mit der Rastkontur (145) verrastet ist, wenn sich der Wählhebel (105) in der Betätigungsstellung (135) und der Sperrschlitten (120) in der Raststellung befindet, und das Rastelement (150) die Rastkontur (145) freigibt, wenn sich der Sperrschlitten (120) in der Freigabestellung befindet.

2. Wählhebelrückstellvorrichtung (100) gemäß Anspruch 1, **gekennzeichnet durch** zumindest ein Federelement (405), das ausgebildet ist, um das Rastelement (150) gegen die Rastkontur (145) zu drücken.

3. Wählhebelrückstellvorrichtung (100) gemäß einem der vorangegangenen Ansprüche, **gekennzeichnet durch** eine Antriebseinheit (205), die ausgebildet ist, um den Sperrschlitten (120) zumindest zwischen der Raststellung und der Freigabestellung zu bewegen.

4. Wählhebelrückstellvorrichtung (100) gemäß Anspruch 3, **gekennzeichnet durch** ein Übersetzungsgetriebe (410), das mit der Antriebseinheit (205) gekoppelt ist, insbesondere wobei das Übersetzungsgetriebe (410) ausgebildet ist, um eine durch die Antriebseinheit (205) erzeugte Drehbewegung in eine lineare Bewegung des Sperrschlittens (120) zu übersetzen.

5. Wählhebelrückstellvorrichtung (100) gemäß einem der vorangegangenen Ansprüche, **gekennzeichnet durch** eine Schaltkulisse (160), die zumindest eine der Ruhestellung (130) zugeordnete erste Vertiefung (170) und eine der Betätigungsstellung (135) zugeordnete zweite Vertiefung (175) aufweist, wobei die erste Vertiefung (170) und die zweite Vertiefung (175) durch eine geneigte Wechselfläche (180) miteinander verbunden sind, wobei ein Endbereich (185) des Wählhebels (105) in der Schaltkulisse (160) zumindest zwischen der ersten Vertiefung (170) und der zweiten Vertiefung (175) verschiebbar angeordnet ist.

6. Wählhebelrückstellvorrichtung (100) gemäß einem der vorangegangenen Ansprüche, **gekennzeichnet durch** eine Vorspanneinrichtung (190), die ausgebildet ist, um den Wählhebel (105) mit einer Vorspannkraft vorzuspannen, wobei der Wählhebel (105) ausgebildet ist, um in der Freigabestellung durch die Vorspannkraft von der Betätigungsstellung (135) zurück in die Ruhestellung (130) bewegt zu werden.

7. Wählhebelrückstellvorrichtung (100) gemäß Anspruch 5 und 6, **dadurch gekennzeichnet, dass** der Wählhebel (105) eine Hebelausnehmung (198) aufweist, wobei die Vorspanneinrichtung (190) einen verschiebbar in der Hebelausnehmung (198) angeordneten oder anordenbaren Rastkörper (195) und zumindest ein Vorspannelement (196) zum Vorspannen des Rastkörpers (195) aufweist, wobei ein Endbereich des Rastkörpers (195) in der Schaltkulisse (160) zumindest zwischen der ersten Vertiefung (170) und der zweiten Vertiefung (175) verschiebbar angeordnet ist, insbesondere wobei der Rastkörper (195) in der Betätigungsstellung (135) mit einer größeren Vorspannkraft vorgespannt ist als in der Ruhestellung (130).

8. Wählhebelrückstellvorrichtung (100) gemäß Anspruch 5 oder 7, **dadurch gekennzeichnet, dass** die erste Vertiefung (170) als Automatikgasse zum automatischen Schalten des Fahrzeuggetriebes und die zweite Vertiefung (175) als manuelle Gasse zum manuellen Schalten des Fahrzeuggetriebes ausgestaltet ist, insbesondere wobei die Ruhestellung (130) einer Parkstellung des Fahrzeuggetriebes entspricht.

9. Wählhebelrückstellvorrichtung (100) gemäß einem der vorangegangenen Ansprüche, **dadurch gekennzeichnet, dass** der Sperrschlitten (120) ferner zumindest ein Blockierelement (200) aufweist und ausgebildet ist, um entlang der Schlittenachse (140) in eine Blockierstellung bewegt zu werden, wobei das Blockierelement (200) in der Blockierstellung ein Bewegen des Wählhebels (105) von der Ruhestellung (130) in die Betätigungsstellung (135) verhindert.

10. Wählhebelrückstellvorrichtung (100) gemäß einem der vorangegangenen Ansprüche, **dadurch gekennzeichnet, dass** der Wählhebel (105) durch eine Aussparung des Schiebelements (115) hindurchgeführt ist.

11. Wählhebelrückstellvorrichtung (100) gemäß einem der vorangegangenen Ansprüche, **dadurch gekennzeichnet, dass** die Hebelführungseinrichtung (110) ferner ein weiteres Schiebelement (155) aufweist, wobei das weitere Schiebelement (155) entlang einer von der Schiebeachse (125) abweichenden weiteren Schiebeachse (140) verschiebbar in der Hebelführungseinrichtung (110) angeordnet ist und ausgebildet ist, um ein Bewegen des Wählhebels (105) zwischen einer Mehrzahl vordefinierter Hebelstellungen entlang der weiteren Schiebeachse (140) zu ermöglichen, insbesondere wobei das Schiebeelement (115) und/oder der Sperrschlitten (120) verschiebbar an dem weiteren Schiebeelement (155) angeordnet ist, insbesondere wobei die weitere Schiebeachse (140) und die Schlittenachse (140) parallel zueinander verlaufen.

12. Verfahren (1000) zum Betreiben einer Wählhebelrückstellvorrichtung (100) gemäß einem der vorangegangenen Ansprüche, wobei das Verfahren (1000) folgende Schritte umfasst:
Verrasten (1005) der Rastkontur (145) mit dem Rastelement (150) aufgrund einer Bewegung des Wählhebels (105) von der Ruhestellung (130) in die Betätigungsstellung (135) entlang einer Schiebeachse (125); und
Freigeben (1010) der Rastkontur (145) aufgrund einer Bewegung des Sperrschlittens (120) von der Raststellung in die Freigabestellung entlang einer von der Schiebeachse (125) abweichenden Schlittenachse (140).

13. Computerprogramm, das dazu eingerichtet ist, alle Schritte eines Verfahrens (1000) gemäß Anspruch 12 durchzuführen und/oder anzusteuern.

14. Maschinenlesbares Speichermedium mit einem darauf gespeicherten Computerprogramm nach Anspruch 13.

## Claims

1. Selector lever resetting apparatus (100) for a vehicle transmission, wherein the selector lever resetting apparatus (100) has the following features:
a selector lever (105) for selecting a transmission setting of the vehicle transmission; and
a lever guide device (110) which has at least one slide element (115) and a locking carriage (120), **characterized in that** the slide element (115) is arranged in the lever guide device (110) so as to be displaceable along a slide axis (125) and has a detent contour (145), wherein the selector lever (105) is mechanically coupled or couplable to the slide element (115) in order to be moved along the slide axis (125) between a rest position (130) and an actuated position (135), wherein the locking carriage (120) is arranged in the lever guide device (110) so as to be displaceable along a carriage axis (140), which differs from the slide axis (125), at least between a detent position and a release position and has at least one detent element (150), wherein the detent element (150) is engaged with detent action with the detent contour (145) when the selector lever (105) is situated in the actuated position (135) and the locking carriage (120) is situated in the detent position, and the detent element (150) releases the detent contour (145) when the locking carriage (120) is situated in the release position.

2. Selector lever resetting apparatus (100) according to Claim 1, **characterized by** at least one spring element (405) which is designed to push the detent element (150) against the detent contour (145).

3. Selector lever resetting apparatus (100) according to any of the preceding claims, **characterized by** a drive unit (205) which is designed to move the locking carriage (120) at least between the detent position and the release position.

4. Selector lever resetting apparatus (100) according to Claim 3, **characterized by** a transformation mechanism (410) which is coupled to the drive unit (205), wherein, in particular, the transformation mechanism (410) is designed to transform a rotational movement generated by the drive unit (205) into a linear movement of the locking carriage (120).

5. Selector lever resetting apparatus (100) according to any of the preceding claims, **characterized by** a switching sliding-lock guide (160) which has at least one first depression (170) assigned to the rest position (130) and one second depression (175) assigned to the actuated position (135), wherein the first depression (170) and the second depression (175) are connected to one another by means of an inclined changeover surface (180), wherein an end region (185) of the selector lever (105) is arranged in the switching sliding-lock guide (160) so as to be displaceable at least between the first depression (170) and the second depression (175).

6. Selector lever resetting apparatus (100) according to any of the preceding claims, **characterized by** a preload device (190) which is designed to preload the selector lever (105) with a preload force, wherein the selector lever (105) is designed to, in the release position, be moved by the preload force from the actuated position (135) back into the rest position (130) .

7. Selector lever resetting apparatus (100) according to Claim 5 and 6, **characterized in that** the selector lever (105) has a lever recess (198), wherein the preload device (190) has a detent body (195), which is arranged or arrangeable displaceably in the lever recess (198), and at least one preload element (196) for preloading the detent body (195), wherein an end region of the detent body (195) is arranged in the switching sliding-lock guide (160) so as to be displaceable at least between the first depression (170) and the second depression (175), wherein, in particular, the detent body (195) is preloaded with a greater preload force in the actuated position (135) than in the rest position (130).

8. Selector lever resetting apparatus (100) according to Claim 5 or 7, **characterized in that** the first depression (170) is designed as an automatic shift slot for the automatic shifting of the vehicle transmission and the second depression (175) is designed as a manual shift slot for the manual shifting of the vehicle transmission, wherein, in particular, the rest position (130) corresponds to a park position of the vehicle transmission.

9. Selector lever resetting apparatus (100) according to any of the preceding claims, **characterized in that** the locking carriage (120) furthermore has at least one blocking element (200) and is designed to be moved along the carriage axis (140) into a blocking position, wherein the blocking element (200), in the blocking position, prevents a movement of the selector lever (105) from the rest position (130) into the actuated position (135).

10. Selector lever resetting apparatus (100) according to any of the preceding claims, **characterized in that** the selector lever (105) is led through an aperture of the slide element (115).

11. Selector lever resetting apparatus (100) according to any of the preceding claims, **characterized in that** the lever guide device (110) furthermore has a further slide element (155), wherein the further slide element (155) is arranged in the lever guide device (110) so as to be displaceable along a further slide axis (140) which differs from the slide axis (125), and said further slide element is designed to permit a movement of the selector lever (105) between a multiplicity of predefined lever positions along the further slide axis (140), wherein, in particular, the slide element (115) and/or the locking carriage (120) is arranged displaceably on the further slide element (155), wherein, in particular, the further slide axis (140) and the carriage axis (140) run parallel to one another.

12. Method (1000) for operating a selector lever resetting apparatus (100) according to any of the preceding claims, wherein the method (1000) comprises the following steps:
detent engagement (1005) of the detent contour (145) with the detent element (150) owing to a movement of the selector lever (105) from the rest position (130) into the actuated position (135) along a slide axis (125); and
release (1010) of the detent contour (145) owing to a movement of the locking carriage (120) from the detent position into the release position along a carriage axis (140) which differs from the slide axis (125) .

13. Computer program configured to carry out and/or actuate all of the steps of a method (1000) according to Claim 12.

14. Machine-readable memory medium with a computer program according to Claim 13 stored thereon.

## Revendications

1. Dispositif de rappel de levier de sélection (100) pour une boîte de vitesses de véhicule automobile, dans lequel le dispositif de rappel de levier de sélection (100) présente les caractéristiques suivantes:
un levier de sélection (105) pour sélectionner une position de boîte de vitesses de la boîte de vitesses de véhicule; et
un dispositif de guidage de levier (110), qui présente au moins un élément coulissant (115) et un chariot d'arrêt (120),
**caractérisé en ce que** l'élément coulissant (115) est disposé de façon coulissante le long d'un axe de coulissement (125) dans le dispositif de guidage de levier (110) et présente un contour d'encliquetage (145), dans lequel le levier de sélection (105) est ou peut être couplé mécaniquement à l'élément coulissant (115), afin d'être déplacé le long de l'axe de coulissement (125) entre une position de repos (130) et une position d'actionnement (135), dans lequel le chariot d'arrêt (120) est disposé dans le dispositif de guidage de levier (110) de façon coulissante le long d'un axe de chariot (140) différent de l'axe de coulissement (125) au moins entre une position d'encliquetage et une position de libération et présente au moins un élément d'encliquetage (150), dans lequel l'élément d'encliquetage (150) est verrouillé avec le contour d'encliquetage (145), lorsque le levier de sélection (105) se trouve dans la position d'actionnement (135) et le chariot d'arrêt (120) dans la position d'encliquetage, et l'élément d'encliquetage (150) libère le contour d'encliquetage (145) lorsque le chariot d'arrêt (120) se trouve dans la position de libération.

2. Dispositif de rappel de levier de sélection (100) selon la revendication 1, **caractérisé par** au moins un élément de ressort (405), qui est configuré pour pousser l'élément d'encliquetage (150) contre le contour d'encliquetage (145).

3. Dispositif de rappel de levier de sélection (100) selon l'une quelconque des revendications précédentes, **caractérisé par** une unité d'entraînement (205), qui est configurée pour déplacer le chariot d'arrêt (120) au moins entre la position d'encliquetage et la position de libération.

4. Dispositif de rappel de levier de sélection (100) selon la revendication 3, **caractérisé par** un engrenage de transmission (410), qui est couplé à l'unité d'entraînement (205), en particulier dans lequel l'engrenage de transmission (410) est configuré pour convertir un mouvement de rotation produit par l'unité d'entraînement (205) en un mouvement linéaire du chariot d'arrêt (120).

5. Dispositif de rappel de levier de sélection (100) selon l'une quelconque des revendications précédentes, **caractérisé par** une coulisse de commutation (160), qui présente au moins un premier creux (170) associé à la position de repos (130) et un second creux (175) associé à la position d'actionnement (135), dans lequel le premier creux (170) et le second creux (175) sont reliés l'un à l'autre par une face d'échange inclinée (180), dans lequel une région d'extrémité (185) du levier de sélection (105) est disposé dans la coulisse de commutation (160) d'une façon déplaçable au moins entre le premier creux (170) et le second creux (175).

6. Dispositif de rappel de levier de sélection (100) selon l'une quelconque des revendications précédentes, **caractérisé par** un dispositif de précontrainte (190), qui est configuré pour appliquer une force de précontrainte au levier de sélection (105), dans lequel le levier de sélection (105) est configuré pour être déplacé, dans la position de libération, par la force de précontrainte de la position d'actionnement (135) en retour à la position de repos (130).

7. Dispositif de rappel de levier de sélection (100) selon une revendication 5 et 6, **caractérisé en ce que** le levier de sélection (105) présente un évidement de levier (198), dans lequel le dispositif de précontrainte (190) présente un corps d'encliquetage (195) disposé ou pouvant être disposé de façon coulissante dans l'évidement de levier (198) et au moins un élément de précontrainte (196) pour appliquer une précontrainte au corps d'encliquetage (195), dans lequel une région d'extrémité du corps d'encliquetage (195) est disposée dans la coulisse de commutation (160) d'une façon déplaçable au moins entre le premier creux (170) et le second creux (175), en particulier dans lequel le corps d'encliquetage (195) est précontraint avec une plus grande force de précontrainte dans la position d'actionnement (135) que dans la position de repos (130).

8. Dispositif de rappel de levier de sélection (100) selon une revendication 5 ou 7, **caractérisé en ce que** le premier creux (170) est configuré comme passage automatique pour la commutation automatique de la boîte de vitesses de véhicule et le second creux (175) est configuré comme passage manuel pour la commutation manuelle de la boîte de vitesses de véhicule, en particulier dans lequel la position de repos (130) correspond à une position de stationnement de la boîte de vitesses de véhicule.

9. Dispositif de rappel de levier de sélection (100) selon l'une quelconque des revendications précédentes, **caractérisé en ce que** le chariot d'arrêt (120) présente en outre un élément de blocage (200) et est configuré pour être déplacé le long de l'axe de chariot (140) dans une position de blocage, dans lequel l'élément de blocage (200) empêche dans la position de blocage un déplacement du levier de sélection (105) de la position de repos (130) à la position d'actionnement (135).

10. Dispositif de rappel de levier de sélection (100) selon l'une quelconque des revendications précédentes, **caractérisé en ce que** le levier de sélection (105) est mené à travers une découpe de l'élément coulissant (115) .

11. Dispositif de rappel de levier de sélection (100) selon l'une quelconque des revendications précédentes, **caractérisé en ce que** le dispositif de guidage de levier (110) présente en outre un autre élément coulissant (155), dans lequel l'autre élément coulissant (155) est disposé dans le dispositif de guidage de levier (110) de façon déplaçable le long d'un autre axe de coulissement (140) différent de l'axe de coulissement (125), et est configuré pour permettre un déplacement du levier de sélection (105) entre une multiplicité de positions de levier prédéfinies le long de l'autre axe de coulissement (140), en particulier dans lequel l'élément coulissant (115) et/ou le chariot d'arrêt (120) est disposé de façon coulissante sur l'autre élément coulissant (155), en particulier dans lequel l'autre axe de coulissement (140) et l'axe de chariot (140) sont parallèles l'un à l'autre.

12. Procédé (1000) pour faire fonctionner un dispositif de rappel de levier de sélection (100) selon l'une quelconque des revendications précédentes, dans lequel le procédé (1000) comprend les étapes suivantes:
verrouiller (1005) le contour d'encliquetage (145) avec l'élément d'encliquetage (150) en raison d'un mouvement du levier de sélection (105) de la position de repos (130) à la position d'actionnement (135) le long d'un axe de coulissement (125); et
libérer (1010) le contour d'encliquetage (145) en raison d'un déplacement du chariot d'arrêt (120) de la position d'encliquetage à la position de libération le long d'un axe de chariot (140) différent de l'axe de coulissement (125).

13. Programme informatique, qui est conçu pour exécuter et/ou commander toutes les étapes d'un procédé (1000) selon la revendication 12.

14. Support de mémoire lisible à la machine avec un programme informatique selon la revendication 13 mémorisé sur celui-ci.
